# EUROPÄISCHE PATENTANMELDUNG

(11) **EP 2 902 091 A1**
(43) Veröffentlichungstag der Anmeldung: **05.08.2015**
(21) Anmeldenummer: 15150878.5
(22) Anmeldetag: 13.01.2015
(51) Int. Cl.: B01D 53/26, B01D 53/00

(54) **VORRICHTUNG ZUM ENTFERNEN VON GAS- ODER DAMPFFÖRMIGEN STOFFEN AUS EINEM GASSTROM**

(30) Priorität: 31.01.2014 DE 102014001362
(71) Anmelder: Messer Group GmbH, 65812 Bad Soden (DE)
(72) Erfinder: Herzog, Friedhelm, 47803 Krefeld (DE)
(74) Vertreter: Münzel, Joachim R.

(57) **Zusammenfassung**

Vorrichtungen nach dem Stand der Technik zum Reinigen von Gasströmen von gas- oder dampfförmigen Stoffen umfassen einen Kondensator, in dem ein mit einem Stoff beladenes Prozessgas an einer Wärmetauscherfläche mit einem Kühlmedium in thermischen Kontakt gebracht wird, wobei der Stoff kondensiert und/oder ausfriert. Das Kondensat wird anschließend in einem Kondensat-Reservoir aufgefangen und entsorgt oder einer anderweitigen Verwendung zugeführt. Bei derartigen Einrichtungen kommt es zur Ablagerung von Feststoffen im Kondensator, insbesondere auf der Wärmetauscherfläche.

Erfindungsgemäß wird zur Entfernung derartiger Ablagerungen, insbesondere von der Wärmetauscherfläche, das Kondensat aus dem Kondensat-Reservoir eingesetzt. Dazu ist eine erfindungsgemäße Vorrichtung mit einem Rückführungssystem ausgerüstet, mittels dessen das Kondensat auf die Wärmetauscherfläche aufgesprüht oder aufgespült werden kann.

## Beschreibung

Die Erfindung betrifft eine Vorrichtung zum Entfernen von gas- oder dampfförmigen Stoffen aus einem Gasstrom, mit einem Kondensator, der mit einer Zuführung und einer Ableitung für den Gasstrom und einer Zuführung und einer Ableitung für ein Kühlmedium sowie mit einer vom Gasstrom umströmten und mit dem Kühlmedium thermisch verbundenen Wärmetauscherfläche ausgerüstet ist, und mit einer ein Kondensat-Reservoir aufweisenden Auffangeinrichtung zum Auffangen und Speichern von aus dem Gasstrom in Form von flüssigem Kondensat auskondensierten Stoffen Die Erfindung betrifft ferner ein Verfahren zum Betreiben einer derartigen Vorrichtung.

Gas- oder dampfförmige Verunreinigungen können aus Gasströmen durch Kondensation oder Ausfrieren abgeschieden werden. Unter "Gasströmen" sind hier allgemein Abluft-, Abgas- oder Prozessgasströme gemeint, die aus Dampf, dampfförmigen Stoffen oder Gasen bestehen können. Insbesondere sind darunter auch relativ hoch mit Lösemitteln beladene Abluftströme gemeint, die beispielsweise bei Prozessen in der Chemie oder als Abgase aus Tanklagern oder Recycling-Anlagen entstehen können. Unter dem Begriff "Verunreinigungen" sind hier ganz allgemein Stoffe zu verstehen, mit denen der Gasstrom beladen ist und die aus diesem entfernt werden sollen; insbesondere handelt es sich dabei um das Gas verunreinigende und zu entsorgende Schadstoffe oder aber auch um Lösemittel oder sonstige Stoffe, die als Wertstoffe einer weiteren Verwendung zugeführt werden können.

Nach dem Stand der Technik werden zu diesem Zweck spezielle Wärmetauscher, sogenannte Kondensatoren eingesetzt, durch die der zu reinigende Gasstrom hindurch geführt und an Wärmetauscherflächen innerhalb des Kondensators, die mittels eines Kühlmediums gekühlt werden, in Wärmekontakt gebracht wird. Wird dabei der Taupunkt der im Gasstrom vorhandenen Verunreinigungen unterschritten, verflüssigt oder verfestigt sich zumindest ein Teil dieser Stoffe und kann vom Trägergasstrom als sogenanntes "Kondensat" abgeschieden werden. Als Kühlmedium kommt dabei meist ein kryogenes Kühlmedium zum Einsatz, wie beispielsweise flüssiger oder kalter gasförmiger Stickstoff, ein verflüssigtes Edelgas, LNG oder ein anderes verflüssigtes Gas; vielfach aber auch nicht-kryogene Kältemittel, wie Kühllauge, Kühlluft oder Kühlwasser oder sonstige gebräuchliche Kühl- oder Kältemittel. Die Wärmetauscherfläche kann dabei sehr unterschiedlich ausgebildet sein; beispielsweise handelt es sich um die Oberfläche einer Anordnung von parallel zueinander angeordneten oder wendelförmig den Kondensator durchlaufenden Rohren mit thermisch gut leitenden Wänden, die vom Kühlmedium durchströmt und vom Gasstrom umströmt werden. Das Kondensat wird aufgefangen und kann anschließend entsorgt oder einer anderen Verwendung zugeführt werden.

Vorrichtungen dieser Art sind beispielsweise aus der DE 19517273 C1, der EP 1736229 A1 oder der EP 19992392 A1 bekannt. Problematisch bei all diesen Vorrichtungen ist, dass es im Laufe des Betriebs zu Ablagerungen von Feststoffen im Bereich der Wärmetauscherflächen des Kondensators, aber auch an anderen Teilen der Apparatur kommen kann. Dabei handelt es sich insbesondere um aus dem Gasstrom ausfrierende Substanzen, wie beispielsweise Wassereis, Lösemitteleis, agglomerierende Partikel, wie beispielsweise Fasern oder Staubteilchen, oder ausfällende Feststoffe, wie beispielsweise Salze. Solche Ablagerungen können nach einer längeren Betriebsdauer von beispielsweise Stunden, Tagen oder Wochen zu einer Beeinträchtigung der Funktionsfähigkeit der Apparatur führen, die sich unter anderem in einem steigenden Druckverlust im Strömungsweg des zu reinigenden Gasstroms bemerkbar macht. Wenn ein unzulässig hoher Druckverlust erreicht wird oder wenn die Ablagerungen den Wärme- oder Stoffaustausch im Apparat zu sehr behindern, müssen die Ablagerungen aus dem Strömungsweg entfernt werden. Je nach Art der Ablagerung werden hierzu unterschiedliche Maßnahmen vorgenommen: gefrorene Substanzen werden durch Abtauen entfernt, die Beseitigung löslicher Substanzen erfolgt durch Zugabe von geeigneten gasförmigen oder flüssigen Lösemitteln und mechanische Verunreinigungen lassen sich durch mechanische Reinigung oder Spülvorgänge entfernen. Derartige Reinigungsvorgänge sind aber in der Regel sehr arbeitsintensiv und erfordern einen hohen apparativen und logistischen Aufwand.

Aufgabe der vorliegenden Erfindung ist daher, eine Vorrichtung zum Entfernen von gas- und/oder dampfförmigen Stoffen aus einem Gasstrom bereitzustellen, die mit einem geringeren Reinigungsaufwand als Apparate nach den Stande der Technik auskommen.

Gelöst ist diese Aufgabe bei einer Vorrichtung der eingangs genannten Art dadurch, dass der Kondensator mit einer Einrichtung zum Entfernen von Feststoffen von der Wärmetauscherfläche ausgerüstet ist, die eine mit dem Kondensat-Reservoir strömungsverbundene Rückleitung, eine Fördereinrichtung für das Kondensat sowie eine mit der Rückleitung strömungsverbundene, auf die Wärmetauscherfläche des Kondensators gerichtete Zuführeinrichtung für das Kondensat aufweist.

Die Rückleitung ermöglicht es in einfacher Weise, das im Kondensat-Reservoir vorliegende Kondensat zum Entfernen von auf der Wärmetauscherfläche anhaftenden Feststoffen einzusetzen. Dabei werden mehrere Eigenschaften des Kondensats ausgenutzt. Zum Ersten wird durch das Beaufschlagen der Wärmetauscherfläche mit flüssigem Kondensat eine mechanische Wirkung erzielt, mittels der zumindest einige der Ablagerungen entfernt werden. Zum Zweiten liegt das Kondensat in der Regel bei einer höheren Temperatur als die Betriebstemperatur des Kondensators vor und kann gegebenenfalls mittels einer geeigneten Heizeinrichtung zusätzlich aufgeheizt werden; dadurch ermöglicht die Erfindung das Abtauen von an der Wärmetauscherfläche festgefrorenen Ablagerungen, wie beispielsweise von Wassereis (sofern deren Schmelzpunkt niedriger ist als die Temperatur des Kondensats). Zum Dritten besteht das Kondensat in vielen Fallen zumindest teilweise aus Lösemittel, wodurch bei der Reinigung der Wärmetauscherfläche solche Bestandteile der Ablagerungen beseitigt werden, die in diesem Lösemittel lösbar sind.

In der Regel muss der reguläre Betrieb des Kondensators, also der Betriebszustand, währenddessen die Reinigung eines Gasstroms erfolgt, für die Entfernung der Feststoffe von der Wärmetauscherfläche unterbrochen werden, es ist aber auch denkbar, die Wärmetauscherfläche während des regulären Betriebes zu reinigen. Zusätzlich zu der Beaufschlagung der Wärmetauscherflächen können im Übrigen auch andere Flächen innerhalb des Kondensators mit dem Kondensat aus dem Kondensat-Reservoir beaufschlagt werden, die von der unerwünschten Anlagerung von Feststoffen betroffen sind, beispielsweise Flächen im Bereich des Zu- oder Abstroms des Prozessgases in den bzw. aus dem Kondensator, oder Umlenkbleche oder Kondensatabläufe.

Bei der Auffangeinrichtung für das Kondensat handelt im einfachsten Falle um ein Ablaufrohr, das in den Boden einer den Kondensator umschließenden Einhausung eingelassen ist und in einem darunter befindlichen Behälter, dem Kondensat-Reservoir, ausmündet. Weiterhin existieren einfache Auffangeinrichtungen, bei denen der Sumpf des Kondensatorgehäuses als Kondensat-Reservoir dient, welches lediglich durch eine Trennscheibe, die von einer oder mehreren Ablauföffnung/en durchbrochen ist, vom Rest des Kondensatorgehäuseinnenraums getrennt ist. Es sind jedoch auch aufwändigere Auffangeinrichtungen im Einsatz, beispielsweise Einrichtungen der Art, wie sie in der EP 1 736 229 A1 beschrieben wird. Die dortige Auffangeinrichtung umfasst ein im Wesentlichen horizontal verlaufendes Auffangsystem, das mit einer im Wesentlichen abwärts gerichtete Kondensatableitung verbunden ist, die wiederum in ein Kondensat-Reservoir ausmündet. Zum Auffangen des Kondensats dienen dabei insbesondere Umlenkbleche, so genannte "Baffles", deren eigentliche Aufgabe darin besteht, den Strömungsweg des Prozessgases im Kondensator vorzugeben. Ein besonders kompakter Aufbau wird erzielt, wenn die Auffangeinrichtung innerhalb einer gemeinsamen Einhausung mit dem Kondensator aufgenommen ist.

Um die Effizienz des Reinigungsvorgangs zu erhöhen und insbesondere die Entfernung von angefrorenen Feststoffen zu erleichtern ist es vorteilhaft, dass die Rückleitung und/oder das Kondensat-Reservoir mit einer Heizeinrichtung ausgerüstet ist. Hierzu ist eine beispielsweise elektrische Heizeinrichtung vorgesehen, die beispielsweise innerhalb der Rückleitung oder innerhalb des Kondensat-Reservoirs angeordnet ist. Fällt beispielsweise das Kondensat im Kondensator bei einer Temperatur unterhalb von 0°C an, so ist es zweckmäßig, das Kondensat vor seiner Zuführung an die Wärmetauscherfläche auf eine Temperatur von deutlich über 0°C, auf beispielsweise 50°C aufzuheizen, um Anlagerungen von Wassereis rasch abschmelzen zu können.

Bevorzugt ist als Fördereinrichtung eine in der Rückleitung angeordnete Pumpe vorgesehen. Es ist jedoch auch vorstellbar, dass zur Förderung des Kondensats ein Druckaufbau innerhalb des Kondensat-Reservoirs erfolgt. Zu diesem Zweck müsste das Kondensat-Reservoir allerdings druckfest und mit geeigneten Sperrventilen strömungsdicht vom Kondensator abtrennbar ausgestaltet sein.

Eine vorteilhafte Weiterbildung der Erfindung sieht vor, dass die Auffangeinrichtung mit einer Kondensatableitung ausgerüstet ist, die in das Kondensat-Reservoir eintaucht. Dadurch wird verhindert, dass im Kondensat-Reservoir rückverdampfendes Kondensat in den Kondensator eindringen kann.

Eine abermals bevorzugte Ausgestaltung der Erfindung ist dadurch gekennzeichnet, dass der Kondensator von einem ersten Betriebszustand, in dem die Auskondensation von gas- und/oder dampfförmigen Stoffen aus einem Gasstrom erfolgt, in einen zweiten Betriebszustand schaltbar ist, in dem die Wärmetauscherfläche mittels des Kondensats aus dem Kondensat-Reservoir gereinigt wird. Die Schaltbarkeit der Betriebszustände wird durch eine Steuereinheit und durch mit der Steuereinheit datenverbundene Ventile in der Rückleitung bzw. in den Zuleitungen für das Prozessgas und/oder das Kühlmedium realisiert. In einer besonders bevorzugten Ausgestaltung erfolgt eine automatische Umschaltung der beiden Betriebszustande. Dabei wird der Druckabfall des zu reinigenden Gasstroms beim Durchströmen des Kondensators durch geeignete Messsensoren erfasst und bei Überschreiten einer vorgegebenen Grenze für den Druckabfall automatisch durch Ansteuerung der entsprechenden Ventile der Betriebszustand von "Gasstromreinigung" auf den Betriebszustand "Reinigung der Wärmetauscherfläche" umgeschaltet.

Bei der Zuführeinrichtung handelt es sich bevorzugt um eine Düsenanordnung, mittels der Kondensat, bevorzugt mit hohem Druck, auf die zu reinigende Wärmetauscherfläche aufgesprüht wird. Eine gleichfalls vorteilhafte und im Aufbau sehr einfache Zuführeinrichtung umfasst einen Zulauf, aus das Kondensat auf die zu reinigende Wärmetauscherfläche strömt und diese anschließend ganz oder teilweise umspült.

Die Aufgabe der Erfindung wird auch durch ein Verfahren mit den Merkmalen des Anspruchs 7 gelöst. Das erfindungsgemäße Verfahren zum Betreiben einer Vorrichtung zum Entfernen von gas- oder dampfförmigen Stoffen aus einem Gasstrom, bei dem ein mit einem Stoff beladener Gasstrom in einem Kondensator an einer Wärmetauscherfläche mit einem Kühlmedium in indirekten Wärmeaustausch tritt, wobei die gas- oder dampfförmigen Stoffe zumindest teilweise zu einem flüssigen Kondensat auskondensieren, und das flüssige Kondensat mittels einer Auffangeinrichtung aus dem Kondensator entfernt und in einem Kondensat-Reservoir zwischengespeichert wird, ist dadurch gekennzeichnet, dass in vorgegebenen Zeitabständen und/oder in Abhängigkeit von gemessenen Parametern die Wärmetauscherfläche des Kondensators mit Kondensat aus dem Kondensat-Reservoir beaufschlagt, also insbesondere besprüht oder umspült wird und dadurch von auf der Wärmetauscherfläche anhaftenden Feststoffen befreit wird. Durch den Einsatz des Kondensats zur Reinigung der Wärmetauscherfläche werden Betriebskosten eingespart, die zur Beschaffung eines zusätzlichen Reinigungsmittels aufgewendet werden müssten. Darüber hinaus werden schädliche Emissionen vermieden. Die Reinigung der Wärmetauscherfläche erfolgt nach dem erfindungsgemäßen Verfahren gleichzeitig während und/oder außerhalb eines Betriebszustands der Vorrichtung, in welchem gas- und/oder dampfförmige Stoffe aus dem Gasstrom entfernt werden.

Anhand der Zeichnung soll nachfolgend ein Ausführungsbeispiel der Erfindung näher erläutert werden.

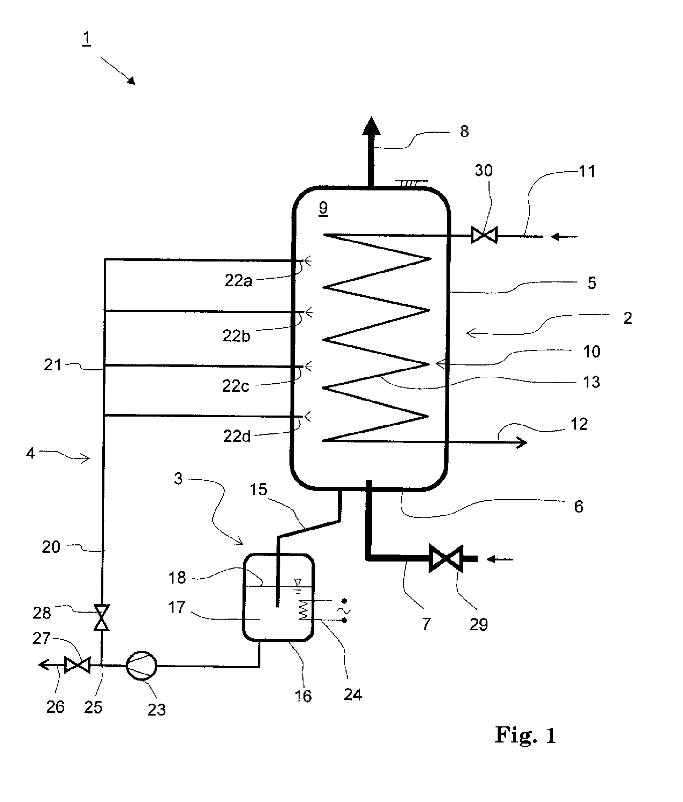

Die Zeichnung (Fig. 1) zeigt schematisch eine erfindungsgemäße Vorrichtung zur Entfernung von gas- oder dampfförmigen Stoffen aus einem Gasstrom.

Die in der Zeichnung gezeigte Vorrichtung 1 umfasst einen Kondensator 2, eine Auffangeinrichtung 3 für Kondensat und eine Rückführungssystem 4 zum Rückführen von Kondensat aus der Auffangeinrichtung 3 in den Kondensator 2. Der Kondensator 2 umfasst einen geschlossenen und thermisch isolierten Behälter 5, durch dessen Wand eine Zuleitung 7 für einen zu reinigenden Gasstrom (Prozessgas) geführt ist, die in das Innere des Behälters 5 hineinragt und etwas oberhalb des Bodens 6 im Behälter 5 ausmündet. Das den Behälter 5 von unten nach oben durchströmende Prozessgas wird über eine Ausleitung 8 im oberen Bereich 9 des Kondensators 2 abgeführt. Zum Kühlen des Prozessgases wird ein Kühlmedium, beispielsweise ein kryogenes Kühlmedium wie Flüssigstickstoff oder kalter gasförmiger Stickstoff, im Gegenstrom zum Prozessgas durch den Kondensator 2 geführt und an einem innerhalb des Behälters 5 angeordneten Wärmetauscher 10 mit dem Prozessgas in thermischen Kontakt gebracht.

Die Erfindung ist freilich nicht auf Apparate mit der hier beispielhaft beschriebenen Strömungsführung von Kühlmedium und Prozessgas beschränkt; beispielsweise kann der Kondensator auch in der Weise aufgebaut sein, dass beide Medien im Gleichstrom oder senkrecht zueinander geführt werden oder dass die Zuleitung und/oder Ausleitung für das Prozessgas seitlich in den Kondensatorbehälter einmündet bzw. einmünden.

Im hier gezeigten Ausführungsbeispiel wird das Kühlmedium über eine Zuleitung 11 herangeführt, durchläuft den Wärmetauscher 10 und wird über eine Ausleitung 12 aus dem Kondensator 5 abgeführt. Beim Wärmetauscher 10 handelt es sich beispielsweise um ein Rohrbündel oder um eine Kühlschlange mit thermisch gut leitenden Wänden, das bzw. die vom Kühlmedium durchströmt und deren Außenoberfläche, hier Wärmetauscherfläche 13 genannt, vom Prozessgas umströmt wird und dadurch einen (indirekten) Wärmetausch zwischen Kühlmedium und Prozessgas ermöglicht. Beim thermischen Kontakt mit dem Kühlmedium kühlt sich das mit gas- und/oder dampfförmigen Stoffen beladene Prozessgas so stark ab, dass der Taupunkt des Stoffes, der aus dem Prozessgasstrom entfernt werden soll, unterschritten wird. Der Stoff kondensiert aus und setzt sich als flüssiges Kondensat an der Wärmetauscherfläche 13 sowie - in geringerem Umfang - an weiteren Flächen, wie beispielsweise den Innenwänden des Behälters 5, ab, fließt zum Boden 6 des Behälters 5 und wird von der Auffangeinrichtung 3 aufgenommen.

Die Auffangeinrichtung 3 umfasst im hier gezeigten Ausführungsbeispiel eine Kondensatableitung 15, die in den Boden 6 des Behälters 5 ausmündet und das sich dort ansammelnde Kondensat aufnimmt. Die Kondensatableitung 15 führt zu einem Kondensat-Reservoir 16, bei dem es sich um einen geschlossenen Behälter handelt, in dem das im Kondensator 2 abgeschiedene flüssige Kondensat in Form eines Kondensat-Bades 17 gesammelt wird. Um zu verhindern, dass im Kondensat-Reservoir 16 rückverdampftes Kondensat in die Kondensatableitung 15 und von dort in den Kondensator 2 eindringt, liegt das Kondensat-Bad 17 im Kondensat-Reservoir 16 zumindest während des Betriebszustandes des Kondensators 2, während dessen eine Reinigung eines Gasstroms erfolgt, bis einer Pegelhöhe 18 vor, bei der das Ende der Kondensatableitung 15 in das Kondensat-Bad 17 eintaucht.

Des Weiteren kann - in der Abbildung nicht gezeigt - der Kondensator für die Kondensatableitung weitere vorteilhafte, jedoch nicht zwingend erforderliche Elemente umfassen, die zu einem möglichst effizienten Abführen des angefallenen Kondensats aus dem Kondensator 2 beitragen können, beispielsweise im Wesentlichen waagerecht angeordnete Flächen, die mit der Wärmetauscherfläche 13 des Wärmetauschers 10 verbunden sind und die jeweils mit einer eigenen Kondensatableitung ausgerüstet sind. Im Übrigen kann das Kondensat-Reservoir 16 auch innerhalb einer gemeinsamen Einhausung mit dem Kondensator 2 angeordnet sein.

Um den Kondensator 2 von Belägen zu befreien, die sich während des Betriebs des Kondensators insbesondere auf der Wärmetauscherfläche 13 in Form von gefrorenen, ausgefällten oder angelagerten Feststoffen ansammeln, wird die Wärmetauscherfläche 13 von Zeit zu Zeit einer Reinigung mit Kondensat aus dem Kondensat-Reservoir 16 unterzogen. Zu diesem Zweck ist die Vorrichtung 1 mit einem im Folgenden beschriebenen Rückführungssystem 4 ausgerüstet.

Das Rückführungssystem 4 umfasst eine Rückleitung 20, die aus dem Bodenbereich des Kondensat-Reservoirs 16 ausmündet und eine Strömungsverbindung zu einer Zuführeinrichtung 21 herstellt. Die Zuführeinrichtung 21 umfasst im Ausführungsbeispiel eine Düsenanordnung aus mehreren Düsen 22a -22d, die jeweils in Richtung auf die Wärmetauscherfläche 13 oder, bei Bedarf, auf weitere Flächen innerhalb des Kondensators 2 ausgerichtet sind. Das Rückführungssystem 4 umfasst des Weiteren eine Pumpe 23 zum Fördern des Kondensats zur Zuführeinrichtung 21 sowie eine im Kondensat-Reservoir 16 angeordnete Heizeinrichtung 24, mittels der das Kondensat bei Bedarf angewärmt werden kann. An einer Abzweigung 25 in der Rückleitung 20 kann das Kondensat auch über eine mit einem Ventil 27 absperrbare Ausleitung 26 entnommen werden. Es ist im Rahmen der Erfindung im Übrigen auch vorstellbar, anstelle oder ergänzend zur Pumpe 23 eine Pumpe in der Rückleitung 20 zwischen Abzweigung 25 und Zuführeinrichtung 21 anzuordnen; eine solche Pumpe ermöglichte es, über die Abzweigung 25 ein zusätzliches Reinigungsmittel in die Rückleitung 20 einzuspeisen und zur Zuführeinrichtung 21 zu fördern. Zur Reinigung der Wärmetauscherfläche 13 von anhaftenden Feststoffen wird Kondensat aus dem Kondensat- Reservoir 16 zur Zuführeinrichtung 21 gefördert und mittels der Düsen 22a - 22d auf die Wärmetauscherfläche 13 gesprüht.

Die Entfernung der Feststoffe von der Wärmetauscherfläche 13 erfolgt aufgrund unterschiedlicher Prozesse, die hier allgemein als "Reinigung" bezeichnet werden: Durch das Auftreffen des Kondensats auf die Wärmetauscherfläche 13 werden zum einen auf dieser anhaftende Feststoffe wenigstens teilweise mechanisch abgelöst. Besteht das Kondensat ganz oder teilweise aus einem Lösemittel, werden darin lösbare Anlagerungen auch im Wege des Einlösens von der Wärmetauscherfläche 13 entfernt. Zudem besitzt das auf die Wärmetauscherfläche 13 gesprühte Kondensat aufgrund einer gewissen Erwärmung während der Lagerung im Kondensat-Reservoir 16 und/oder durch Beheizung eine höhere Temperatur als die Temperatur auf der Wärmetauscherfläche 13 während des Betriebs des Wärmetauschers 10. Wird in einer Betriebspause die Durchleitung von Kühlmedium durch den Wärmetauscher 10 unterbrochen, werden beim Auftragen des Kondensats auf die Wärmetauscherfläche 13 Feststoffe, die zuvor während des Betriebs des Wärmetauschers 10 dort angefroren waren, von der Wärmetauscherfläche 13 abgetaut, sofern deren Schmelzpunkt niedriger als die Temperatur des Kondensats sind. Bei Bedarf wird das Kondensat zusätzlich mittels der Heizeinrichtung 24 auf eine die Schmelztemperatur des jeweiligen Feststoffs übersteigende Temperatur beheizt.

Im Rahmen der Erfindung können im Übrigen anstelle oder ergänzend zu der hier als Düsenanordnung ausgestalteten Zuführeinrichtung 21 auch andere Zuführungseinrichtungen vorgesehen sein, über die das Kondensat den von den Feststoffen zu reinigenden Oberflächen zugeführt wird, wie beispielsweise ein Zulauf, mit dem das Kondensat auf die Oberfläche aufgespült wird.

Die zuvor beschriebene Vorgang der Reinigung der Wärmetauscherfläche 13 stellt üblicherweise einen eigenen Betriebszustand der Vorrichtung 1 dar, während dessen nicht zugleich die Reinigung eines Prozessgasstroms erfolgt. Der Wechsel zwischen den Betriebszuständen erfolgt mit Hilfe von Ventilen 28, 29, 30, die mit einer hier nicht gezeigten Steuerung datenverbunden sind. Im Betriebszustand, in dem eine Reinigung eines Prozessgasstroms erfolgt, ist das Ventil 28 in der Rückleitung 20 geschlossen und das Ventil 29 in der Zuleitung 7 für das Prozessgas sowie das Ventil 30 in der Zuleitung 11 für das Kühlmedium geöffnet. Im Betriebszustand, in dem die Reinigung der Wärmetauscherfläche 13 erfolgen soll, sind dagegen die Ventile 29, 30 geschlossen und das Ventil 28 geöffnet. Das Ventil 27 in der Ausleitung 26 ist während beider Betriebsphasen geschlossen. Um den Wechsel der Betriebszustände möglichst effizient zu gestalten, kann der Druckverlust am Kondensator 2 beim Durchströmen des Prozessgases mittels hier nicht gezeigter Messsonden erfasst werden. Ein im Laufe des Betriebs der Vorrichtung 1 steigender Druckverlust ist ein wesentlicher Hinweis darauf, dass das Durchströmen des Kondensators 2 durch im Strömungsweg anhaftende Feststoffe behindert wird. Überschreitet der Druckverlust einen bestimmten vorgegebenen Wert, wird entweder ein Warnsignal abgegeben, das einer Bedienperson die Notwendigkeit einer Reinigung der Vorrichtung anzeigt, oder die Steuereinrichtung schaltet durch Betätigung der Ventile 28, 29, 30 sowie der Pumpe 23 automatisch in den Betriebszustand, in dem die Reinigung der Wärmetauscherfläche 13 erfolgt.

### Bezugszeichenliste

- 1: Vorrichtung
- 2: Kondensator
- 3: Auffangeinrichtung
- 4: Rückführungssystem
- 5: Behälter
- 6: Boden
- 7: Zuleitung (für das Prozessgas)
- 8: Ausleitung (für das Prozessgas)
- 9: Oberer Bereich (des Behälters)
- 10: Wärmetauscher
- 11: Zuleitung (für das Kühlmdium)
- 12: Ausleitung (für das Kühlmedium)
- 13: Wärmetauscherfläche
- 14: -
- 15: Kondensatableitung
- 16: Kondensat-Reservoir
- 17: Kondensatbad
- 18: Pegelhöhe
- 19: -
- 20: Rückleitung
- 21: Zuführeinrichtung
- 22a-d: Düsen
- 23: Pumpe
- 24: Heizeinrichtung
- 25: Abzweigung
- 26: Ausleitung
- 27: Ventil
- 28: Ventil
- 29: Ventil
- 30: Ventil

## Patentansprüche

1. Vorrichtung zum Entfernen von gas- oder dampfförmigen Stoffen aus einem Gasstrom, mit einem Kondensator (2), der mit einer Zuführung (7) und einer Ableitung (8) für den Gasstrom und einer Zuführung (11) und einer Ableitung (12) für ein Kühlmedium sowie mit einer vom Gasstrom umströmten und mit dem Kühlmedium thermisch verbundenen Wärmetauscherfläche (13) ausgerüstet ist, und mit einer ein Kondensat-Reservoir (16) aufweisenden Auffangeinrichtung (3) zum Auffangen und Speichern von aus dem Gasstrom in Form von flüssigem Kondensat auskondensierten Stoffen,
**dadurch gekennzeichnet,**
**dass** der Kondensator (2) mit einer Einrichtung (4) zur Entfernung von Feststoffen von der Wärmetauscherfläche (13) ausgerüstet ist, die eine mit dem Kondensat-Reservoir (16) strömungsverbundene Rückleitung (20), eine Fördereinrichtung (23) für das Kondensat sowie eine mit der Rückleitung (20) strömungsverbundene, auf die Wärmetauscherfläche (13) des Kondensators (2) gerichtete Zuführeinrichtung (21) für das Kondensat aufweist.

2. Vorrichtung nach Anspruch 1, **dadurch gekennzeichnet,**
**dass** die Rückleitung (20) und/oder das Kondensat-Reservoir (16) mit einer Heizeinrichtung (24) ausgerüstet ist.

3. Vorrichtung nach Anspruch 1 oder 2, **dadurch gekennzeichnet, dass** als Fördereinrichtung eine in der Rückleitung (20) angeordnete Pumpe (23) vorgesehen ist.

4. Vorrichtung nach einem der vorhergehenden Ansprüche, **dadurch gekennzeichnet, dass** die Auffangeinrichtung (3) mit mindestens einer Kondensatableitung (15) ausgerüstet ist, die in das Kondensat-Reservoir (16) eintaucht.

5. Vorrichtung nach einem der vorhergehenden Ansprüche, **dadurch gekennzeichnet, dass** der Kondensator (2) von einem ersten Betriebszustand, in dem eine Auskondensation von gas- und/oder dampfförmigen Stoffen aus einem Gasstrom erfolgt, in einen zweiten Betriebszustand schaltbar ist, in dem eine Reinigung der Wärmetauscherfläche (13) mittels des Kondensats aus dem Kondensat-Reservoir erfolgt.

6. Vorrichtung nach einem der vorhergehenden Ansprüche, **dadurch gekennzeichnet, dass** die Zuführeinrichtung (21) eine Düsenanordnung (22a - 22d) oder einen Zulauf umfasst.

7. Verfahren zum Betreiben einer Vorrichtung zum Entfernen von gas- oder dampfförmigen Stoffen aus einem Gasstrom, bei dem ein mit einem Stoff beladener Gasstrom in einem Kondensator (2) an einer Wärmetauscherfläche (13) mit einem Kühlmedium in indirekten Wärmeaustausch tritt, wobei die gas- oder dampfförmigen Stoffe zumindest teilweise zu einem flüssigen Kondensat auskondensieren, und das flüssige Kondensat mittels einer Auffangeinrichtung (3) aus dem Kondensator (2) entfernt und in einem Kondensat-Reservoir (16) zwischengespeichert wird,
**dadurch gekennzeichnet,**
**dass** in vorgegebenen Zeitabständen und/oder in Abhängigkeit von gemessenen Parametern die Wärmetauscherfläche (13) des Kondensators (2) mit Kondensat aus dem Kondensat-Reservoir (16) beaufschlagt und dadurch auf der Wärmetauscherfläche (13) anhaftenden Feststoffen entfernt werden.
